# EUROPEAN PATENT APPLICATION

(11) **EP 2 905 299 A1**
(43) Date of publication of application: **12.08.2015**
(21) Application number: 14182447.4
(22) Date of filing: 27.08.2014
(51) Int. Cl.: C08G 75/00

(54) **METHOD FOR PREPARING POLYETHERSULFONE**

(30) Priority: 13.09.2013 KR 20130110720; 14.02.2014 KR 20140017315
(71) Applicant: Samsung SDI Co., Ltd., Yongin-si, Gyeonggi-do (KR)
(72) Inventor: Kim, Hyun Seok, Gyeonggi-do (KR); Bae, Im Hyuck, Gyeonggi-do (KR); Seo, Dong Wan, Gyeonggi-do (KR); Jin, Young Sub, Gyeonggi-do (KR)
(74) Representative: Kreller-Schober, Maria

(57) **Abstract**

Disclosed herein is a method for preparing a polyethersulfone. The method includes oxidation of a poly arylene ether sulfone-sulfide compound including a repeat unit represented by Formula 1 with an aqueous solution of an organic acid and an aqueous solution of hydrogen peroxide. In the method, the overall process is carried out under mild conditions of 190°C or less, thereby enabling economic preparation of a polyethersulfone without complicated post-treatment, such as separation of by-products formed from a basic compound, and the like. 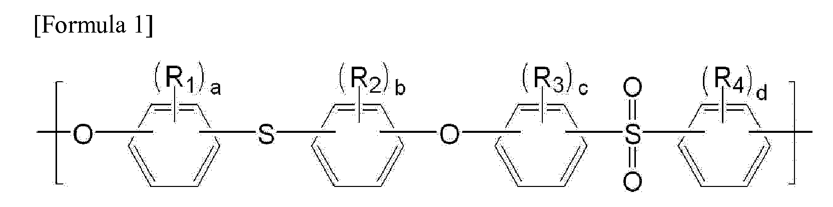 wherein R₁, R₂, R₃ and R₄ are each independently a C₁ to C₁₀ hydrocarbon group, and a, b, c and d are each independently an integer from 0 to 4.

## Description

The present invention relates to a method for preparing a polyethersulfone. More particularly, the present invention relates to a method for preparing a polyethersulfone (PES) through oxidation of a sulfide functional group of a poly arylene ether sulfone-sulfide compound (PES-S) in an aqueous solution.

Polyethersulfone (poly arylene ether sulfone, PES) is a super engineering plastic exhibiting excellent heat resistance and is widely used for materials for membranes, medical apparatuses, automotive parts, aircraft parts, infant feeding bottles, and the like. Moreover, demand for polyethersulfone is increasing in the field of secondary fuel cell membranes and general-purpose membranes.

Generally, polyethersulfone (PES) can be obtained, using a polar organic solvent, by condensation polymerization of a dihalogenodiphenylsulfone compound with a divalent phenol compound such as dihydroxydiphenylsulfone compounds and the like in the presence of an alkali metal compound, or by synthesis of a divalent alkali metal salt of the divalent phenol compound, followed by condensation polymerization with the dihalogenodiphenylsulfone compound.

However, such a method is typically performed at a high temperature of 220°C or more and requires addition of a strongly basic compound for reaction. Thus, there are drawbacks in that side reaction, such as decomposition of polyethersulfone and the like, can occur at high reaction temperature, and that complicated post-treatment is required for separation of by-products from the polyethersulfone having poor solubility in a solvent after completion of the reaction.

Therefore, there is a need for a method which is performed under mild conditions, such as a polymerization temperature of 190°C or less, an oxidation temperature of 70°C or less and the like, and which allows preparation of polyethersulfone without complicated post-treatment.

Thus, it is the object of the present invention to overcome disadvantages and to provide a method for preparing a polyethersulfone, which is performed under mild conditions of a polymerization temperature of 190°C or less and an oxidation temperature of 70°C or less, and allows preparation of polyethersulfone without complicated post-treatment, such as separation of by-products formed from a basic compound, and the like.

This object has been achieved by the provision of a method for preparing a polyethersulfone. The method includes oxidation of a poly arylene ether sulfone-sulfide compound including a repeat unit represented by Formula 1 with an aqueous solution of an organic acid and an aqueous solution of hydrogen peroxide. 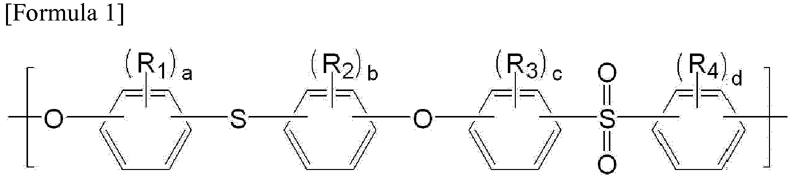 wherein R₁, R₂, R₃ and R₄ are each independently a C₁ to C₁₀ hydrocarbon group, and a, b, c and d are each independently an integer from 0 to 4.

In one embodiment, the oxidation may be performed at 30°C to 70°C.

In one embodiment, the oxidation may include adding the poly arylene ether sulfone-sulfide compound to the aqueous solution of the organic acid, followed by dropwise addition of the aqueous solution of hydrogen peroxide.

In one embodiment, the oxidation may include preparing an aqueous solution of a mixture of the organic acid and hydrogen peroxide by adding dropwise the aqueous solution of hydrogen peroxide to the aqueous solution of the organic acid, followed by addition of the poly arylene ether sulfone-sulfide compound.

In one embodiment, the organic acid may be present in an amount of 10 parts by weight to 100 parts by weight in the aqueous solution of the organic acid based on 100 parts by weight of water; hydrogen peroxide may be present in an amount of 3 parts by weight to 20 parts by weight in the aqueous solution of hydrogen peroxide based on 100 parts by weight of water; and the aqueous solution of the organic acid may be present in an amount of 180 parts by weight to 1,500 parts by weight and the aqueous solution of hydrogen peroxide may be present in an amount of 200 parts by weight to 600 parts by weight, based on 100 parts by weight of the poly arylene ether sulfone-sulfide compound.

In one embodiment, a volume ratio of the organic acid to hydrogen peroxide (organic acid : hydrogen peroxide) may be 0.1 : 1 to 10 : 1 in the aqueous solution of the organic acid and the aqueous solution of hydrogen peroxide.

In one embodiment, the organic acid may include at least one of formic acid, acetic acid, propionic acid, oxalic acid, and glycolic acid.

In one embodiment, the poly arylene ether sulfone-sulfide compound may be a polymer prepared by condensation of a dihydroxydiarylsulfide compound represented by Formula 2 and a dihalogenodiarylsulfone compound represented by Formula 3. 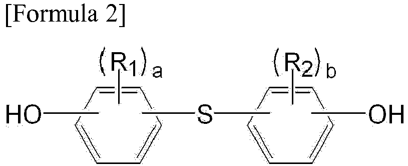 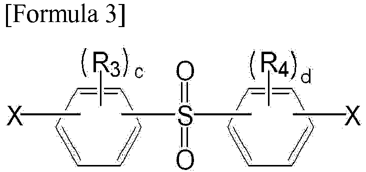 wherein R₁, R₂, R₃, R₄, a, b, c and d are defined as set forth in Formula 1, and X is a halogen atom.

In one embodiment, condensation may be performed by heating the dihydroxydiarylsulfide compound and the dihalogenodiarylsulfone compound to 160°C to 190°C in an organic solvent in the presence of an alkali metal salt or an alkali earth metal salt.

In one embodiment, preparation and oxidation of the poly arylene ether sulfone-sulfide compound may be a one-pot reaction.

In one embodiment, the poly arylene ether sulfone-sulfide compound may have a number average molecular weight from 7,000 g/mol to 90,000 g/mol.

In one embodiment, the polyethersulfone may have a number average molecular weight from 7,500 g/mol to 110,000 g/mol.

Hereinafter, embodiments of the present invention will be described in detail.

In accordance with one embodiment of the present invention, a method for preparing a polyethersulfone (poly arylene ether sulfone, PES) includes oxidation of a poly arylene ether sulfone-sulfide compound (PES-S) including a repeat unit represented by Formula 1 with aqueous solutions of an organic acid and hydrogen peroxide. 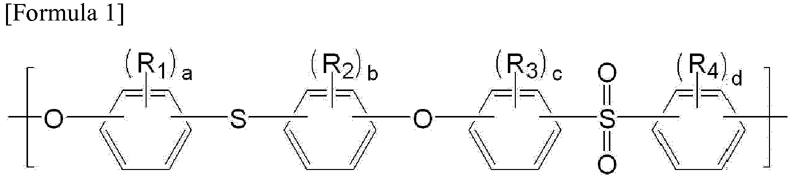 wherein R₁, R₂, R₃ and R₄ are each independently a C₁ to C₁₀ hydrocarbon group, for example, a C₁ to C₁₀ alkyl group, a C₆ to C₁₀ aryl group, or the like; and a, b, c and d are each independently an integer from 0 to 4.

According to the present invention, the oxidation is performed by the aqueous solution of the organic acid and the aqueous solution of hydrogen peroxide. Typically, a mixture of an (organic) acid and an oxidant forms a peracid, which can finally oxidize a sulfide group of the poly arylene ether sulfone-sulfide compound (PES-S) into a sulfone group via a sulfoxide group.

In one embodiment, the oxidation may be performed by adding the polymer (poly arylene ether sulfone-sulfide compound) to the aqueous solution of the organic acid, followed by dropwise addition of the aqueous solution of hydrogen peroxide, without being limited thereto.

In another embodiment, the oxidation may be performed by preparing an aqueous solution of a mixture of the organic acid and hydrogen peroxide through dropwise addition of the aqueous solution of hydrogen peroxide to the aqueous solution of the organic acid, followed by adding the polymer to the aqueous solution of the mixture, without being limited thereto.

For reference, since exothermic reaction occurs when the aqueous solution of hydrogen peroxide is added to the aqueous solution of the organic acid, the aqueous solution of hydrogen peroxide is preferably added as slowly as possible.

Examples of the organic acid in the aqueous solution of the organic acid may include formic acid, acetic acid, propionic acid, oxalic acid, and glycolic acid and mixtures thereof, without being limited thereto. Specifically, the organic acid may be formic acid, acetic acid, or a mixture thereof.

The organic acid may be present in an amount of 10 parts by weight to 100 parts by weight, for example, 15 parts by weight to 30 parts by weight in the aqueous solution of the organic acid based on 100 parts by weight of water. In addition, hydrogen peroxide may be present in an amount of 3 parts by weight to 20 parts by weight, for example, 5 parts by weight to 10 parts by weight in the aqueous solution of hydrogen peroxide based on 100 parts by weight of water. That is, according to the present invention, the aqueous solution of the organic acid and the aqueous solution of hydrogen peroxide may include an excess of water as compared with aqueous solutions of acid/oxidant used in typical oxidation of a polyarylene sulfide, and oxidation may be performed in the aqueous solution. If the amount of the organic acid is less than 10 parts by weight in the aqueous solution of the organic acid based on 100 parts by weight of water, there is a concern that the poly arylene ether sulfone-sulfide compound is not oxidized into polyethersulfone at high yield, and if the amount of the organic acid is greater than 100 parts by weight, there is a concern of dissociation of some polymer chains.

In addition, if the amount of hydrogen peroxide is less than 3 parts by weight in the aqueous solution of hydrogen peroxide based on 100 parts by weight of water, there is a concern that the poly arylene ether sulfone-sulfide compound is not oxidized into polyethersulfone at high yield, and if the amount of the organic acid is greater than 20 parts by weight, there is a concern of promotion of exothermic reaction.

In the oxidation, the aqueous solution of the organic acid may be present in an amount of 180 parts by weight to 1,500 parts by weight, for example, 190 parts by weight to 1,000 parts by weight, specifically, 200 parts by weight to 300 parts by weight, and the aqueous solution of hydrogen peroxide may be present in an amount of 200 parts by weight to 600 parts by weight, for example, 300 parts by weight to 400 parts by weight, based on 100 parts by weight of the poly arylene ether sulfone-sulfide compound.

If the amount of the aqueous solution of the organic acid is less than 180 parts by weight based on 100 parts by weight of the poly arylene ether sulfone-sulfide compound, there is a concern that the poly arylene ether sulfone-sulfide compound is not oxidized into polyethersulfone at high yield, and if the amount of the aqueous solution of the organic acid is greater than 1,500 parts by weight, there is a concern of dissociation of some polymer chains.

In addition, if the amount of the aqueous solution of hydrogen peroxide is less than 200 parts by weight based on 100 parts by weight of the poly arylene ether sulfone-sulfide compound, there is a concern that the poly arylene ether sulfone-sulfide compound is not oxidized into polyethersulfone at high yield, and if the amount of the aqueous solution of hydrogen peroxide is greater than 600 parts by weight, there is a concern of loss of an excess of hydrogen peroxide due to exothermic reaction of the organic acid and hydrogen peroxide.

In one embodiment, in the aqueous solution of the organic acid and the aqueous solution of hydrogen peroxide, a volume ratio of the organic acid to hydrogen peroxide (organic acid : hydrogen peroxide) may be 0.1 : 1 to 10 : 1, for example, 0.1 : 1 to 0.5 : 1, specifically 0.25 : 1 to 0.5 : 1. Within this range, the poly arylene ether sulfone-sulfide compound can be oxidized into polyethersulfone at high yield of 98% or more.

In one embodiment, the oxidation can be performed under mild conditions of a temperature from 30°C to 70°C, for example, from 30°C to 40°C and atmospheric pressure for, for example, 1 hour to 14 hours. Within this temperature range, the polyethersulfone can be prepared (oxidized) without side reactions, such as decomposition of the polyethersulfone due to high temperature, and the like.

According to the present invention, the poly arylene ether sulfone-sulfide compound (PES-S) may be any compound including the repeat unit represented by Formula 1. For example, the poly arylene ether sulfone-sulfide compound may have a solid form such as fibers, powders, and the like, or may have a solution form obtained by dissolution in an organic solvent.

In one embodiment, the poly arylene ether sulfone-sulfide compound may be a polymer prepared by condensation of a dihydroxydiarylsulfide compound represented by Formula 2 and a dihalogenodiarylsulfone compound represented by Formula 3. 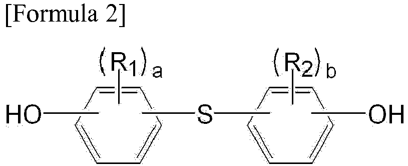 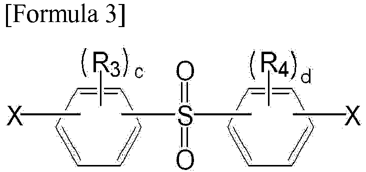 wherein R₁, R₂, R₃, R₄, a, b, c and d are defined as set forth in Formula 1, and X is a halogen atom such as a chlorine atom (Cl), a fluorine atom (F), a bromine atom (Br), an iodine atom (I) and the like.

In one embodiment, the condensation may be performed by heating the dihydroxydiarylsulfide compound and the dihalogenodiarylsulfone compound to 160°C to 190°C in an organic solvent in the presence of an alkali metal salt or an alkali earth metal salt.

In the condensation, a mole ratio of the dihydroxydiarylsulfide compound to the dihalogenodiarylsulfone compound may be 1 : 0.9 to 1 : 1.1, for example, 1 : 0.95 to 1 : 1.05. Within this range, the poly arylene ether sulfone-sulfide compound (PES-S) can be obtained at high yield.

The alkali metal salt or the alkali earth metal salt may include, for example, potassium carbonate (K₂CO₃), sodium carbonate (Na₂CO₃), calcium carbonate (CaCO₃), potassium hydroxide (KOH), sodium hydroxide (NaOH), and mixtures thereof, without being limited thereto. The alkali metal salt or the alkali earth metal salt may be present in an amount of 100 parts by mole to 220 parts by mole, for example, 110 parts by mole to 210 parts by mole, based on 100 parts by mole of the dihydroxydiarylsulfide compound and the dihalogenodiarylsulfone compound. For example, sodium hydroxide, calcium hydroxide or the like may be present in an amount of 200 parts by mole to 210 parts by mole. Within this range, the poly arylene ether sulfone-sulfide compound (PES-S) can be obtained at high yield.

The organic solvent may be any polar and/or non-polar organic solvent used in the art without limitation, and may include, for example, N-methylpyrrolidone (NMP), toluene, dimethylformamide (DMF), dimethylacetamide (DMAc), sulfolane, diphenyl sulfone (DPS), propylene carbonate, ethylene carbonate, mixtures thereof, and the like. The organic solvent may be present in an amount of 80 parts by weight to 150 parts by weight, for example, 90 parts by weight to 110 parts by weight, based on 100 parts by weight of the dihydroxydiarylsulfide compound and the dihalogenodiarylsulfone compound. Within this range, a poly arylene ether sulfone-sulfide compound having a high molecular weight can be obtained.

In one embodiment, condensation may be performed at a temperature from 160°C to 190°C, for example, from 170°C to 190°C, and at atmospheric pressure for, for example, 1 hour to 5 hours. Within this range, a poly arylene ether sulfone-sulfide compound having a high molecular weight can be obtained.

In one embodiment, the poly arylene ether sulfone-sulfide compound may have a number average molecular weight from 7,000 g/mol to 90,000 g/mol, as measured by gel permeation chromatography (GPC), without being limited thereto.

In one embodiment, as shown in Reaction Formula 1, the method for preparing a polyethersulfone according to the present invention may be a method for preparing a polyethersulfone including a repeat unit represented by Formula 4 by preparing the poly arylene ether sulfone-sulfide compound (PES-S), which corresponds to an intermediate product and includes the repeat unit represented by Formula 1, through condensation polymerization of the dihydroxydiarylsulfide compound represented by Formula 2 and the dihalogenodiarylsulfone compound represented by Formula 3 using the alkali metal salt or alkali earth metal salt and the organic solvent (base/solvent), followed by oxidation of the PES-S with the aqueous solution of the organic acid and the aqueous solution of hydrogen peroxide (acid/H₂O₂ aqueous solution), as described above. In addition, preparation and oxidation of the poly arylene ether sulfone-sulfide compound may be one-pot reaction. 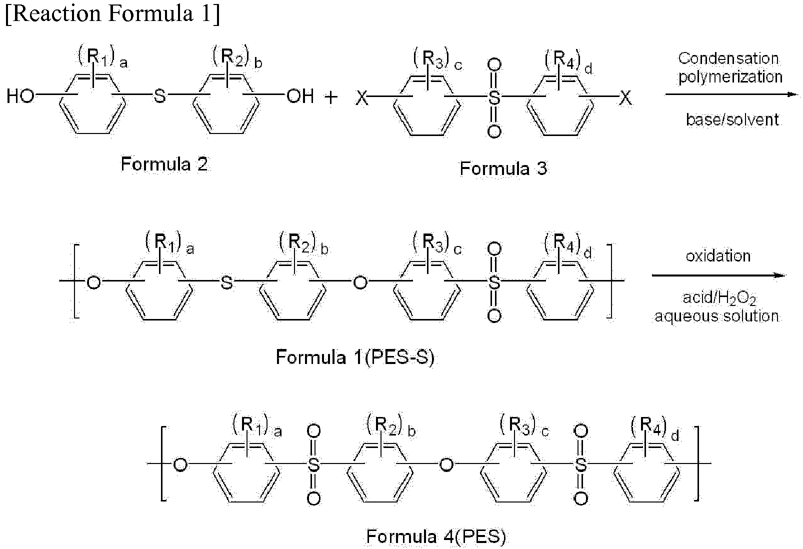 where R₁, R₂, R₃, R₄, X, a, b, c and d are defined as set forth in Formulae 1 to 3.

According to the present invention, one-pot reaction refers to a reaction process in which, during a 2-stage or more reaction process as described above, the intermediate product (PES-S) is continuously added to the next-stage (oxidation) reactants (aqueous solutions of organic acid and hydrogen peroxide) without separation and purification thereof, thereby obtaining a target polyethersulfone (PES) compound.

The oxidation of the poly arylene ether sulfone-sulfide compound (PES-S) is performed in a heterogeneous state, and PES-S exhibits a similar oxidation rate regardless of forms thereof. For example, PES-S exhibits almost the same oxidation rate when used in solid form such as fibers, powders and the like, and even when used in bead form formed by dissolving PES-S in an organic solvent (sulfolane, DMAc, DMF, NMP, and the like), followed by precipitation in water.

That is, in preparation of polyethersulfone (PES) by one-pot reaction, since the poly arylene ether sulfone-sulfide compound (PES-S) is precipitated in bead form when an organic solvent solution including the poly arylene ether sulfone-sulfide compound (PES-S) prepared by condensation polymerization is added to the aqueous solution of the organic acid or to the aqueous solution of the organic acid and the aqueous solution of hydrogen peroxide, oxidation can be performed as in oxidation of the purified PES-S.

In addition, since the method for preparing a polyethersulfone according to the present invention allows oxidation in an aqueous solution state, there are merits in that a salt can be more effectively removed from the obtained polymer, and in that an aqueous solution obtained by filtration after completion of oxidation can be used again in oxidation by adjusting the concentrations of the organic acid and the oxidant without post-treatment.

In one embodiment, the polyethersulfone prepared by the method according to the present invention may have a number average molecular weight from 7,500 g/mol to 110,000 g/mol as measured by gel permeation chromatography (GPC), without being limited thereto.

Hereinafter, the present invention will be described in more detail with reference to some examples. However, it should be noted that these examples are provided for illustration only and are not to be construed in any way as limiting the present invention.

### EXAMPLE

### Preparative Example 1

120 mL of NMP and 60 mL of toluene were added to a mixture of 17.6 g (61.2 mmol) of dichlorodiphenyl sulfone (DCDPS), 13.1 g (60 mmol) of thiodiphenol (TDP) and 10.6 g (76.8 mmol) of potassium carbonate (K₂CO₃), followed by removal of water and toluene generated in the course of heating the mixture to 130°C for 4 hours. Next, the mixture was heated to 180°C for 15 hours, followed by cooling to 60°C and filtration. A brown viscous solution was precipitated in a water/methanol (3:7) solution and filtered, followed by drying in a vacuum oven, thereby obtaining a polyphenylene ether sulfone-sulfide compound (yield: 94%, number average molecular weight (Mn): 11,200 g/mol, polydispersity index (PDI): 3.46) in chip form.

### Preparative Example 2

160 mL of NMP and 80 mL of toluene were added to a mixture of 25.93 g (102 mmol) of difluorodiphenyl sulfone (DFDPS), 21.8 g (100 mmol) of thiodiphenol (TDP) and 16.6 g (120 mmol) of potassium carbonate (K₂CO₃), followed by removal of water and toluene generated in the course of heating the mixture to 130°C for 2 hours. Next, the mixture was heated to 150°C for 5 hours, followed by cooling to 60°C and filtration. A pale yellow viscous solution thus obtained was precipitated in a water/methanol (3:7) solution and filtered, followed by drying in a vacuum oven, thereby obtaining a polyphenylene ether sulfone-sulfide compound (yield: 92%, number average molecular weight (Mn): 80,000 g/mol, polydispersity index (PDI): 1.7) in fiber form.

### Preparative Example 3

160 mL of NMP and 80 mL of toluene were added to a mixture of 25.93 g (102 mmol) of difluorodiphenyl sulfone (DFDPS), 21.8 g (100 mmol) of thiodiphenol (TDP) and 16.6 g (120 mmol) of potassium carbonate (K₂CO₃), followed by removal of water and toluene generated in the course of heating the mixture to 130°C for 2 hours. Next, the mixture was heated to 150°C for 15 hours, followed by cooling to 60°C and filtration. A pale yellow viscous solution thus obtained was precipitated in a water/methanol (3:7) solution and filtered, followed by drying in a vacuum oven, thereby obtaining a polyphenylene ether sulfone-sulfide compound (yield: 92%, number average molecular weight (Mn): 94,000 g/mol, polydispersity index (PDI): 1.7) in fiber form.

### Example 1

2 g of the polyphenylene ether sulfone-sulfide compound (PES-S) prepared in Preparative Example 1 was pulverized and added to a mixture of 50 mL of water and 8 mL of formic acid, followed by heating the reactants to 40°C. Next, 4 mL of a 30% aqueous solution of hydrogen peroxide (H₂O₂) was added dropwise to the reactants for 30 minutes, followed by stirring at the same temperature for 16 hours. After stirring, solids were filtered and washed with 20 mL of methanol three times. The washed white solids were dried in a vacuum oven at 80°C, thereby obtaining a polyethersulfone (PES, yield: 99%, number average molecular weight (Mn): 15,000 g/mol) as a final product.

### Example 2

A polyethersulfone (PES, yield: 99%, number average molecular weight (Mn): 95,400 g/mol) was obtained in the same manner as in Example 1 except that the polyphenylene ether sulfone-sulfide compound (PES-S) prepared in Preparative Example 2 was used instead of the polyphenylene ether sulfone-sulfide compound (PES-S) prepared in Preparative Example 1.

### Example 3

A polyethersulfone (PES, yield: 92%, number average molecular weight (Mn): 109,000 g/mol) was obtained in the same manner as in Example 1 except that the polyphenylene ether sulfone-sulfide compound (PES-S) prepared in Preparative Example 3 was used instead of the polyphenylene ether sulfone-sulfide compound (PES-S) prepared in Preparative Example 1.

### Example 4

120 mL of NMP and 60 mL of toluene were added to a mixture of 17.6 g (61.2 mmol) of dichlorodiphenyl sulfone (DCDPS), 13.1 g (60 mmol) of thiodiphenol (TDP) and 10.6 g (76.8 mmol) of potassium carbonate (K₂CO₃), followed by removal of water and toluene generated in the course of heating the mixture to 130°C for 4 hours. Next, the mixture was heated to 180°C for 15 hours, followed by cooling to room temperature, thereby preparing a PES-S in a viscous solution state. Next, the PES-S in a solution state was added to an aqueous solution of an organic acid, in which 800 mL of water and 200 mL of formic acid were mixed, followed by heating the reactants to 40°C. Next, 200 mL of a 30% aqueous solution of hydrogen peroxide (H₂O₂) was added dropwise to the resulting material over 30 minutes, followed by stirring at the same temperature for 16 hours. After stirring, solids were filtered and washed with 20 mL of methanol three times. The washed white solids were dried in a vacuum oven at 80°C, thereby obtaining a polyethersulfone (PES, yield: 99%, number average molecular weight (Mn): 16,000 g/mol) as a final product.

Each of the polyethersulfones prepared in Examples 1 to 4 was subjected to ¹H-NMR measurement using an FT-NMR (Bruker Co., Ltd., 300 MHz). Results shown below confirm that the polyethersulfone was prepared.
(¹H-NMR, 300 MHz, DMSO-d₆): δ 7.98 (d, *J*=9.0 Hz, 4H), 7.27 (d, *J*=8.7 Hz, 4H)

It should be understood that various modifications, changes, alterations, and equivalent embodiments can be made by those skilled in the art without departing from the spirit and scope of the invention.

## Claims

1. A method for preparing a polyethersulfone, comprising: oxidation of a poly arylene ether sulfone-sulfide compound comprising a repeat unit represented by Formula 1 with an aqueous solution of an organic acid and an aqueous solution of hydrogen peroxide. 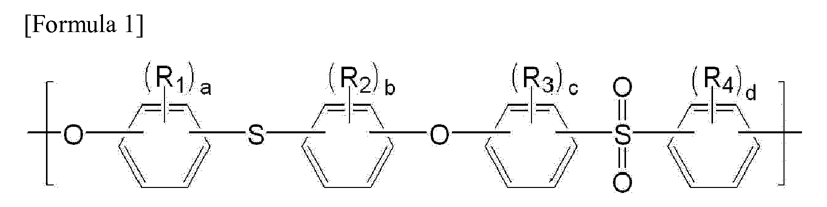 wherein R₁, R₂, R₃ and R₄ are each independently a C₁ to C₁₀ hydrocarbon group, and a, b, c and d are each independently an integer from 0 to 4.

2. The method according to claim 1, wherein the oxidation is performed at 30°C to 70°C.

3. The method according to claim 1 or 2, wherein the oxidation comprises adding the poly arylene ether sulfone-sulfide compound to the aqueous solution of the organic acid, followed by dropwise addition of the aqueous solution of hydrogen peroxide.

4. The method according to any one of claims 1 to 3, wherein the oxidation comprises preparing an aqueous solution of a mixture of the organic acid and hydrogen peroxide by adding dropwise the aqueous solution of hydrogen peroxide to the aqueous solution of the organic acid, followed by addition of the poly arylene ether sulfone-sulfide compound.

5. The method according to any one of claims 1 to 4, wherein the organic acid is present in an amount of 10 parts by weight to 100 parts by weight in the aqueous solution of the organic acid based on 100 parts by weight of water;
hydrogen peroxide is present in an amount of 3 parts by weight to 20 parts by weight in the aqueous solution of hydrogen peroxide based on 100 parts by weight of water; and the aqueous solution of the organic acid is present in an amount of 180 parts by weight to 1,500 parts by weight and the aqueous solution of hydrogen peroxide is present in an amount of 200 parts by weight to 600 parts by weight, based on 100 parts by weight of the poly arylene ether sulfone-sulfide compound.

6. The method according to any one of claims 1 to 5, wherein a volume ratio of the organic acid to hydrogen peroxide (organic acid : hydrogen peroxide) is 0.1 : 1 to 10 : 1 in the aqueous solution of the organic acid and the aqueous solution of hydrogen peroxide.

7. The method according to any one of claims 1 to 6, wherein the organic acid comprises at least one of formic acid, acetic acid, propionic acid, oxalic acid, and glycolic acid.

8. The method according to any one of claims 1 to 7, wherein the poly arylene ether sulfone-sulfide compound is a polymer prepared by condensation of a dihydroxydiarylsulfide compound represented by Formula 2 and a dihalogenodiarylsulfone compound represented by Formula 3: 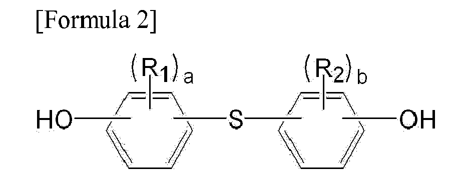 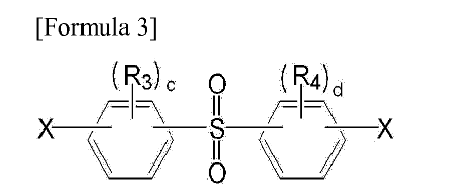 wherein R₁, R₂, R₃, R₄, a, b, c and d are defined as set forth in Formula 1, and X is a halogen atom.

9. The method according to claim 8, wherein the condensation is performed by heating the dihydroxydiarylsulfide compound and the dihalogenodiarylsulfone compound to 160°C to 190°C in an organic solvent in the presence of an alkali metal salt or an alkali earth metal salt.

10. The method according to claim 8 or 9, wherein the preparation and oxidation of the poly arylene ether sulfone-sulfide compound is one-pot reaction.

11. The method according to any one of claims 1 to 10, wherein the poly arylene ether sulfone-sulfide compound has a number average molecular weight from 7,000 g/mol to 90,000 g/mol.

12. The method according to any one of claims 1 to 11, wherein the polyethersulfone has a number average molecular weight from 7,500 g/mol to 110,000 g/mol.
